# EUROPEAN PATENT APPLICATION

(11) **EP 4 455 902 A1**
(43) Date of publication of application: **30.10.2024**
(21) Application number: 24171128.2
(22) Date of filing: 18.04.2024
(51) Int. Cl.: G06F 16/53

(54) **SEARCHING WITH IMAGES**

(30) Priority: 18.04.2023 US 202363496833 P; 06.02.2024 US 202418434246
(71) Applicant: Etsy, Inc., Brooklyn, NY 11201 (US)
(72) Inventor: DOLEV, Eden, Brooklyn, NY 11201 (US); AWAD, Alaa, Brooklyn, NY 11201 (US)
(74) Representative: Fish & Richardson P.C.

(57) **Abstract**

Methods, systems, and apparatus, including computer programs encoded on computer storage media, for searching with images One of the methods includes receiving a query requesting to search a dataset of images using a first input image; inputting the first image data into a multi-task classification model trained to identify one or more images from the dataset of images; obtaining, as output from a layer of the neural network preceding the plurality of classification heads used for training and in response to the first image data, a first embedding for the first image data; identifying, using the first embedding and from among a plurality of embeddings corresponding to images in the dataset of images, a set of images that are similar to the first input image; and providing, in response to the received query and for display on a client device, the set of images.

## Description

### CROSS-REFERENCE TO RELATED APPLICATIONS

This application claims priority to U.S. Provisional Application No. 63/496,833, filed April 18, 2023 and U.S. Application No. 18/434,246, filed on February 6, 2024, the contents of which are incorporated by reference herein.

### BACKGROUND

A search engine is a computer program that facilitates locating electronically stored information, for example, in a database. Search engines are commonly used in distributed computer systems, such as those connected to the Internet, for providing information to users. In one example implementation, a user can provide input to the search engine in the form of a search query, which may include one or more words that are relevant to the information sought. The search engine searches for information that satisfies the search query and returns the information to the user as a set of search results.

### SUMMARY

This specification relates to processing a user query for information, e.g., on an exchange platform, and in particular, relates to processing the user query using an image and returning, in response to the query, a set of images from a dataset of images (e.g., images from listings on the exchange platform) that are similar to the image included in the query.

In general, one innovative aspect of the subject matter described in this specification can be embodied in methods that include the actions of receiving, from a client device, a query requesting to search a dataset of images using a first input image, where the query includes first image data for the first input image; inputting the first image data into a multi-task classification model trained to identify one or more images from the dataset of images in response to image data for a particular image, where the multi-task classification model is a neural network that is trained using a plurality of classification heads corresponding to a plurality of classification tasks, where the multi-task classification model is trained using separate loss functions for each respective classification task, and where the plurality of classification tasks include one or more classification tasks based on separate training datasets; obtaining, as output from a layer of the neural network preceding the plurality of classification heads used for training and in response to the first image data, a first embedding for the first image data; identifying, using the first embedding and from among a plurality of embeddings corresponding to images in the dataset of images, a set of images that are similar to the first input image; and providing, in response to the received query and for display on a client device, the set of images. Other embodiments of this aspect include corresponding computer systems, apparatus, and computer programs recorded on one or more computer storage devices, each configured to perform the actions of the methods.

The foregoing and other embodiments can each optionally include one or more of the following features, alone or in combination. In particular, one embodiment includes all the following features in combination. In some implementations, actions include generating, using the multi-task classification model, the plurality of embeddings for the images in the dataset of images. In some implementations, identifying the set of images that are similar to the first input image, includes: computing, using a nearest neighbor algorithm, a respective distance metric between the first embedding and each embedding in the plurality of embeddings; identifying a set of embeddings from among the plurality of embeddings for which the corresponding distance metric satisfies a predetermined threshold; and determining the set of images corresponding to the identified set of embeddings. In some implementations, identifying the set of embeddings from among the plurality of embeddings for which the corresponding distance metric satisfied the predetermined threshold, includes one of: identifying the set of embeddings with top-N distance metrics from among the computed distance metrics, where N is the predetermined threshold and N is an integer greater than 1, or identifying the set of embeddings with respective distance metrics that each meet or exceed the predetermined threshold.

In some implementations, the plurality of classification tasks include a low-resolution image-based fine-grained taxonomy classification and at least one or more of: a fine-grained taxonomy classification; a top-level taxonomy classification; or a primary color classification. In some implementations, the low-resolution image-based fine-grained taxonomy classification is fine-grained taxonomy classification based on user-uploaded images as opposed to professional images uploaded by a platform.

In some implementations, actions include training the multi-task classification model, including: identifying, for each classification head and its corresponding classification task, a respective training dataset of training images and a corresponding set of labels, where the training datasets are separate and each training dataset is used for training a particular classification head; sampling, from each training dataset, a number of training images and corresponding labels to form a training mini-batch; providing the training mini-batch as input to the multi-task classification model; generating, using the multi-task classification model, an embedding for each training image in the mini-batch of training images; computing, for each classification head in the plurality of classification heads, a loss value that is based on a comparison of output of the classification head for training images obtained from the training dataset corresponding to the classification head; and optimizing, each classification head in the plurality of classification heads, using the respective computed loss values for the classification head. In some implementations, sampling, from each training dataset, a number of training images and corresponding labels to form a training mini-batch includes: sampling an equal number, for each classification head, of training images and corresponding labels from each training dataset. In some implementations, the loss value is computed using a sparse categorical cross entropy function.

In some implementations, the multi-task classification model includes: an EfficientNet or ResNext-based neural network; a separate classification head for each classification task; and a softmax activation for each respective classification head. In some implementations, optimizing, each classification head in the plurality of classification heads, using the respective computed loss values for the classification head includes: identifying an index value of a given training image and label; determining the index value is a valid index value for a first classification head; and in response to determining the index value is a valid index value for the first classification head, optimizing the first classification head using a loss value computed using the given training image and label. In some implementations, determining the index value is a valid index value for the first classification head includes: determining the index value is included in a set of valid index values for the first classification head.

In general, a second innovative aspect of the subject matter described in this specification can be embodied in methods for training a multi-task classification model, wherein the multi-task classification model is a neural network that is trained using a plurality of classification heads corresponding to a plurality of classification tasks, and is trained using separate loss functions for each respective classification task, wherein the training comprises actions that include identifying, for each classification head and its corresponding classification task, a respective training dataset of training images and a corresponding set of labels, where the training datasets are separate and each training dataset is used for training a particular classification head; sampling, from each training dataset, a number of training images and corresponding labels to form a training mini-batch; providing the training mini-batch as input to the multi-task classification model; generating, using the multi-task classification model, an embedding for each training image in the mini-batch of training images; computing, for each classification head in the plurality of classification heads, a loss value that is based on a comparison of output of the classification head for training images obtained from the training dataset corresponding to the classification head; and optimizing, each classification head in the plurality of classification heads, using the respective computed loss values for the classification head. Other embodiments of this aspect include corresponding computer systems, apparatus, and computer programs recorded on one or more computer storage devices, each configured to perform the actions of the methods.

The foregoing and other embodiments can each optionally include one or more of the following features, alone or in combination. In particular, one embodiment includes all the following features in combination. In some implementations, the loss value is computed using a sparse categorical cross entropy function.

The technology described in this specification can be implemented so as to realize one or more of the following advantages. For example, by including multiple classifications in a training of an embedding engine, the searching system techniques described in this document can improve generated embeddings for identifying similar items, e.g., items similar to search input, such as a user taken photo, provided by a client device. By using separate databases-e.g., data stores, data sources, or the like-for training, including a database for review photos with characteristics similar to photos likely to be uploaded as search input, the techniques described can further improve embedding generation, e.g., by generating embeddings for user taken photos representing a first object that are similar to professional taken photos (e.g., for product listings on an exchange platform) representing the same first object.

In some implementations, separate data sources are used for training. For example, training images that have rare attributes can be downsampled, e.g., before being used for training. Training images that have attributes seen more frequently in a data set or in data items to be searched can be upsampled-e.g., duplicated or repeatedly used for training and adjusting related models described.

Technologies described can improve generated embeddings, e.g., for user taken photos or professional photos. For example, images to be searched can include user taken photos or professional photos-e.g., photos from online resources or from listings in an exchange platform. Technologies described can improve generation of embeddings for any type of input data, including user taken photos or professional photos. The improved embeddings can improve the retrieval of related images or other items from a database-e.g., any source of data.

Technologies described can include models that learn how to generate embeddings that can capture any number of visual attributes, such as category, subcategory, color, material, shape, among others. By learning to capture these signals, the trained models can improve retrieval of items that are similar in those attributes. For example, a model that was trained on only color and category may be able to more effectively retrieve similar items of a similar category and color, but not necessarily of a similar material. For providing relevant related items, it can be beneficial to include multiple attributes.

Technologies described can also improve downstream processes. For example, multimodal embedding models used for retrieval or recommender ranking models can be improved by using embeddings that capture a diverse set of visual attributes, e.g., that are significant for a given downstream task, such as multimodal embedding models used for retrieval or recommender ranking models.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example searching environment.
FIG. 2 is a flowchart of an example process for performing a search using a multi-task classification model.
FIG. 3 is a flowchart of an example process for training a multi-task classification model.

Like reference numbers and designations in the various drawings indicate like elements.

### DETAILED DESCRIPTION

This specification relates to processing a user query for information, e.g., on an exchange platform, and in particular, relates to processing the user query using an image and returning, in response to the query, a set of images from a dataset of images (e.g., images from listings on the exchange platform) that are similar to the image included in the query.

Techniques can include a multi-task classification model trained using multiple classification tasks. Each classification task can use separate training databases. After training, an intermediate embedding-generated by the multi-task classification model processing search input from a client device-and a dataset of one or more other embeddings can be used to perform an embedding search to identify items similar to the search input.

The techniques described herein are applicable in an exchange platform, which enables exchange of goods, content, and services between end users and providers. Providers can list or provide their goods, contents, and services on the exchange platform, and end users obtain the goods, content, and services from the providers via the exchange platform. The techniques described herein are also applicable in other applications, including but not limited to, search engine applications, recommendation systems, etc. For brevity and ease of description, the following description is described in the context of exchange platforms.

In general, an exchange platform is configured to provide data corresponding to a user query after processing the user query. The user query can be received from a user device corresponding to a user of a user account of the exchange platform. The user device can include a smartphone, a smart tablet, or a smart wearable device (e.g., a smart watch), a computer, or other suitable user devices. The user account can be a registered account of the exchange platform or a guest of the platform (e.g., without registration). The user query can include a request for data that represents a list of items (e.g., goods, services, and content) on the exchange platform that users of the exchange platform can obtain. The exchange platform can transmit the data corresponding to the user query for representing (e.g., displaying) on a user device.

In some implementations, a user query can include an image entered by the user (e.g., an image captured using the user's device, an image obtained by the user from another source such as another online platform). The data corresponding to the user query can include a list of items and corresponding images that are related to the user query, and in particular, can include items with images that are similar to the image entered by the user in the query. For example, the user query can include an image of a ring. The data corresponding to and responsive to the user query can be a set of listings on the exchange platform with images that are similar to the image of the ring entered by the user when submitting the query.

A user may be provided with controls allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

Training of a multi-task classification model can utilize a data sampling methodology that enables samples from various heterogeneous datasets such that class labels are balanced across a final output dataset. In some implementations in the context of listing on an exchange platform, seller input attributes, such as item color and material, are optional, and thus, can be very sparse. And, as more classification tasks are added to the multi-task classification model, it becomes increasingly difficult to sample training data equally across classifications. To overcome this limitation, the techniques described herein utilize a data sampler that can read from entirely disjoint datasets, one for each classification task, and each with its own unique set of labels. At training time, the data sampler can combine an equal number of examples from each dataset into mini-batches. All examples can be processed by the multi-task classification model, but loss from each classification head can be calculated only for examples from the classification head's corresponding source dataset. The unique gathered loss function allows optimization across all tasks and data sources. Moreover, the sampler allows training on different forms of data like crisp or professional product listing images as well as grainy or low-resolution user or buyer review photos.

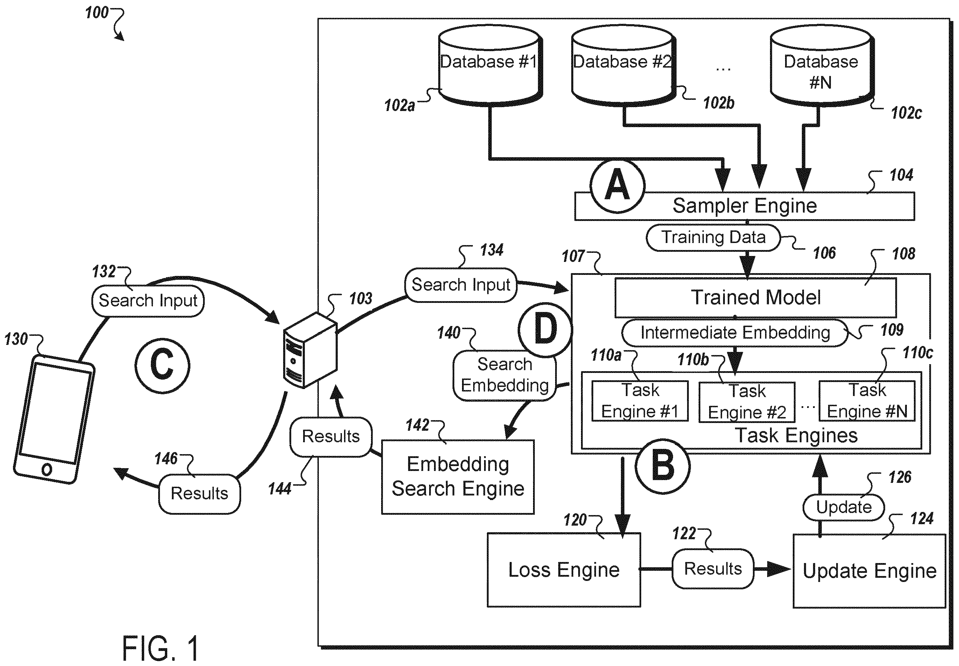

These and additional details are described below with reference to FIGS. 1-3.

FIG. 1 shows an example searching environment 100. The searching environment 100 includes a searching system 103 and a client device 130. The searching system 103 is configured, using one or more computers, to perform operations described in reference to FIG. 1. The searching system 103 can be configured to train an embedding engine 107. The embedding engine 107 can include a portion of a multi-task classification model that itself includes a trained model 108 and task engines-e.g., task engines 110a-c. The embedding engine 107 can be trained for classification tasks performed by the task engines. To generate embeddings, the embedding engine 107 can output embeddings generated before a classification stage of the task engines. These embeddings can be used in an embedding search engine 142, using a distance searching algorithm, such as nearest neighbor, or other type, to generate results 144 that can be provided to a client device 130.

In stage A, a sampler engine 104 of the searching system 103 generates training data 106. The training data 106 can be used by the searching system 103 to train the embedding engine 107. The training data 106 can include portions of data from databases 102a-c. In some cases, each database of the databases 102a-c corresponds to a task engine included in the task engines 1 10a-c. For example, the first task engine 110a can be configured to classify whether or not an image is a particular color. Other classification tasks can include classifying shape, material, pattern, category, taxonomy, color, primary color, secondary color, among others. Classifying can include classifying based on any visual attribute. In some cases, classifying can include an item identifier indicating if an image includes a given item-e.g., more than one image of the same item. Classification tasks can include classifying one or more of: category, otherwise referred to as taxonomy, including, e.g., accessories, home & living, electronics, among others; fine-grained item category, e.g., belt buckles, dining chairs; primary color; secondary color, among others.

In some implementations, classification tasks include classifying similar images using user click data. For example, a classification task can include classifying a given image of a training item as belonging to a set of related images, where the related images represent images of listings on an exchange platform navigated by a user in a given session. In some cases, an image is only added to a cluster of images if a user navigated on the listing for more than a threshold amount of time. In some cases, an image is only added to a cluster if more than a threshold number of users also navigated between two or more related images for listings. Including a task engine for classifying whether an image is related to one or more of the related images, the embedding engine 107 can be trained to generate embeddings for related images that are similar. In this way, embedding based searching can return results that include some or all such related images. In some cases, a group of images can be formed when a user associates multiple images with a same item-e.g., tagging or manual association operations.

In some implementations, the task engines 1 10a-c classify for each of top level taxonomy, fine grained taxonomy and primary color. For example, the first task engine 110a can classify the broad category a training image of the training data represents. The second task engine 110b can classify the specific category a training image represents. The nth task engine 110c can classify the primary color is represented in a training image.

A database, such as the first database 102a, can store training data for the first task engine 1 10a. The training data can be specific to the classification task. In some cases, training data for a task includes one or more labels specific for the task. The labels can indicate ground truth values. For a task engine classifying color, a label can include an image's color.

In some implementations, the sampler engine 104 generates the training data 106 by including equal numbers of items from one or more databases, e.g., the databases 102a-c. For example, the sampler engine 104 can include three items from the first database 102a configured to train the first task engine 1 10a, three items from the second database 102b configured to train the second task engine 1 10b, and three items from the Nth database 102c configured to train the Nth task engine 1 10c. In general, any number of databases and task engines can be used. In some cases, other numbers of training items are included. In some cases, the sampler engine 104 generates the training data 106 with different numbers of items from different databases, e.g., not equal.

In general, the data in the databases 102a-c can be separate. For example, one problem with existing data can be that attributes, e.g., provided by users, such as users of an exchange platform, are sparse. The sparseness of some labels, used for ground truth and training processes of some of the task engines 1 10a-c, can be overcome using a version of the sampler engine 104 that reads from disjoint datasets, e.g., one for each task, and each with its own unique set of labels. For training, the sample engine 104 can combine an equal number of examples from each dataset into mini-batches for training, e.g., the training data 106. All examples can be processed by the embedding engine 107 but loss from each classification head, e.g., the task engines 1 10a-c, can be calculated only for examples from the head's corresponding source dataset.

Training items in the training data 106 can include images and labels. The images can include images from listings in an exchange platform. The images can include images from reviews of products listed on an exchange platform. The labels can be provided by an uploading user or added by other systems or users. For images used for color classification, labels can include a label for color. For images used for category classification, labels can include what category the item displayed in the image belongs to. In general, any suitable classification task can be setup with corresponding images and labels to facilitate learning a given classification.

In some implementations, the training data 106 is configured for triplet loss. In some cases, triplet loss can be used to help generate similar embeddings for images with similar color, material, pattern, or other characteristics. To mitigate this problem, techniques include a deep metric learning approach utilizing triplet loss. Contrastive losses, such as triplet loss, can be used over classification losses, like categorical cross entropy, to contrast similar versus dissimilar images rather than to just classify images with the same category label.

In one example triplet loss approach, the searching system 103 trains the trained model 108 or the task engines 1 10a-c on triplets of examples where each triplet includes an anchor, a positive example, and a negative example. The searching system 103 can use a triplet loss function that, based on a generated embedding for each of the three examples, pushes the anchor and positive examples closer together while pushing the negative examples further away. In some cases, the anchor and positive examples can include pairs of images from the same listing item in an exchange platform. An image from a different listing can be used as the negative example. Each of the anchor, positive, or negative example(s) can be included in the training data 106. Different pre-trained models can be used as a starting point for the trained model 108 including EfficientNet, CLIP, Image-GPT, VGG-16, Resnet-50, Inception, or MobileNet.

In stage B, the trained model 108 obtains the training data 106. The trained model 108 can include layers of a convolutional neural network. The trained model 108 can include layers from an EfficientNet or ResNext-based neural network. In some cases, the trained model 108 is at least partially pre-trained-e.g., for detecting objects in images or classifying elements of an image. In some cases, a portion of pre-trained weights can be set and not updated during training.

In some cases, the earlier a layer or weight is in a model, the more abstract a concept the layer or weight encodes. Similar principles can apply wither later layers or weights tending to encode higher level concepts. As an example, when a trained model processes an image of a person, a first set of layers in the model might encode a basic visual concept such as dots, lines, or contours. The next few layers might encode more complex concepts such as circles. Later layers might encode an eye. The final layers might encode a face or a person.

With this understanding, the techniques described in this document can freeze one or more weights or layers-e.g., a first set of weights or layers of the model 108. Because new training data may be unlikely to change basic concepts typically included in the first set of weights or layers, these weight or layers can be held constant during training while higher level concepts are fine tuned according to the specific elements of training data included. Training by freezing N data layers or weights can increase the speed of training a model, such as the model 108. The exact number of how many layers or weights are held constant can be determined by experimenting using different parameters and determining an optimal set of layers or weights according to evaluation metrics. In some cases, the number of layers or weights can be determined autonomously according to a stop condition-e.g., a threshold accuracy level or threshold maximum layers or weights to freeze. For example, an optimization algorithm that accounts for time of training reduction and accuracy can determine the maximum number of layers or weights to freeze while keeping accuracy of the trained model within a threshold level of accuracy-e.g., 90% accuracy.

The trained model 108 generates an intermediate embedding 109. The intermediate embedding 109 can include one or more values that represent a given training image being processed. The values can be in the form of a vector.

The task engines 110a-c obtain the intermediate embedding 109 from the trained model 108. The task engines 110a-c generate further embeddings and finally a classification indicating whether or not the image can be classified according to a classification task performed by each. The task engines 1 10a-c can include one or more layers of a neural network configured to adjust output values based on input.

The task engines 1 10a-c can perform tasks that are similar but operate using different data. For example, one of the task engines 110a-c can perform taxonomy classification using images from listings on an exchange platform. Another one of the task engines 110a-c can perform a similar or the same taxonomy classification using different images from reviews on an exchange platform. This can help the resulting embedding engine 107 to generate embeddings for professional-looking, high resolution, or other features associated with listings, that are similar to embeddings of similar objects taken by non-listing users, e.g., using a phone, varied backgrounds, low resolution, or other features.

In some implementations, using one or more different task engines using different types of data can improve the generated embeddings. For example, by using a separate classification process, e.g., performed by the first task engine 1 10a, operating on exclusively images from user reviews and not on images from listings of an exchange platform, the embedding engine 107 can generate embeddings for professional and user photos that are similar. This can help users search for similar images using images obtained by their phones which may be dissimilar to the types of images used for product listings-e.g., no professional lighting, more noisy backgrounds, among other changes in characteristics.

In general, photos uploaded by sellers on an exchange platform are typically high quality, have professional lighting, or are taken over a white or premeditated background. But photos from a client device, such as a smartphone, might be blurry, poorly lit, or on a diversity of backgrounds that distract from an object a user is searching for. Deep learning can be a powerful and useful tool but training deep learning models can be highly susceptible to biases in data distribution and training on high quality, seller-provided product images can bias a trained model away from relatively lower quality user photos. By using separate datasets that include at least one dataset that includes exclusively, or a majority of images from user reviews, the searching system 103 can reduce image biasing towards professional looking photos and improve the ability to search for items using photos taken by a user.

The task engines 1 10a-c can provide output to a loss engine 120. The loss engine 120 generates results 122. The results 122 are then used by the update engine 124 to update one or more weights or parameters, using the update 126, of the trained model 108 or the task engines 1 10a-c. The weights to be updated can, in some cases, exclude those weights or parameters that are frozen to help reduce training time of the model 108 as discussed in this document. The loss engine 120 can generate the 122 results by comparing one or more classifications generated by the task engines 1 10a-c to labels included in the training data 106.

In some implementations, the searching system 103 uses a gradient behavior for training the embedding engine 107. In some cases, by setting missing labels to a sentinel value and implementing custom wrappers for the loss or metric classes which set the loss to zero when encountering a placeholder label, the searching system 103 can train specific weights or parameters of the embedding engine 107 based on specific training data-e.g., training data identified for a particular subset of the embedding engine 107, such as a particular task engine. By using separate datasets and training, the searching system 103 can be modular-allowing improvement by specifying additional particular datasets, e.g., generated separately, for particular classifications using task engines to further refine generated embeddings.

In some implementations, the searching system 103 uses a Stochastic Gradient Descent with Weight Decay (SGDW) optimizer for training. In one example, the searching system 103 can use a batch size of 64 and a learning rate of 0.8 (0.01 per GPU used), with a "gamma" of 0.1 applied every 3 epochs for 9 epochs (dividing the learning rate by 10 every 3 epochs). In some cases, these or other hyperparameters can be used when training the embedding engine 107 either partially or end-to-end. In some cases, when adjusting a learning rate for a batch size, the searching system 103 can use an order of magnitude lower learning rate to avoid NaN loss. In some cases, the searching system 103 can use a learning rate schedule which limits decreases on learning rate to help avoid validation loss increasing.

In some implementations, the loss engine 120 includes a wrapper engine configured to adjust which training items are used to update which task engine. For example, training items can come from one of the databases 102a-c. In some cases, only if a training item originated from a given database is loss-generated from processing that training item-used to update the task engine corresponding to that given database. If the first database 102a includes all training items for the first task engine 1 10a, the wrapper engine of the loss engine 120 can determine if a training item processed by the first task engine 110a originated from the first database 102a or not. If the item did not, then the wrapper engine can exclude the loss from being used for updating the first task engine 110a or other values. In some cases, exclusion is accomplished using a set of valid indices. For example, each training item in the training data 106 can be assigned an index. Each training item can correspond to training one of the task engines 1 10a-c. The corresponding indices of those training items can be identified and stored by the searching system 103. The loss engine 120 can obtain the valid indices for each of the task engines 1 10a-c and filter out loss values for updating using the sets of valid indices. In some cases, loss is set to 0 when the loss engine 120 encounters a placeholder value or identifies an invalid index. Wrapper classes can be used around a tensorflow library to ignore gradient updates for training items that are invalid for a given task engine.

In stage C, the client device 130 provides search input 132. The client device 130 can use an application programming interface or other system to provide the search input 132. In some cases, the client device 130 is a type of smartphone equipped with cameras. The search input 132 can include images obtained by a camera of the client device 130. The search input 132 can include other elements, such as text or video, among others. An image of the search input 132 can be obtained by the client device 130 or by another device and later obtained by the client device 130. The client device 130 and the searching system 103 can be connected using any suitable form of connection, e.g., Internet, wired, wireless, among other.

The searching system 103 can process the search input 132 to generate the results 144 and then provide results 146 to the client device 130. The results 146 can be a reformatted version of the results 144, a subset of the results 144, or a combination of these.

In stage D, the searching system 103 provides the search input 134 to the embedding engine 107. The embedding engine 107 can process the search input 134 similar to the training data 106. Instead of classifying the search input, the embedding engine 107 can generate a search embedding 140-e.g., an embedding that would have been generated prior to one or more classifications. The search embedding 140 can represent embeddings similar to those generated in training prior to the task engines 1 10a-c.

The generated search embedding 140 can be a list of values, e.g., a vector of values. In some cases, the search embedding 140 is a combination of embeddings generated by one or more first layers of the task engines 1 10a-c-e.g., layers before a final classification layer of the task engines 1 10a-c. In some cases, the search embedding 140 is generated by the trained model 108 before being provided to the task engines 110a-c.

The embedding engine 107 provides the search embedding 140 to the embedding search engine 142. The embedding search engine 142 can execute a searching algorithm, such as a distance searching algorithm, to find items similar to the search input 134. In some cases, the items are listing images. For example, the embedding search engine 142 can obtain one or more embeddings generated by the embedding engine 107 that represent listings on an exchange platform. In some cases, the embedding search engine 142 identifies embeddings most similar to an embedding generated by the embedding engine 107 based on the search input 134. The most similar embeddings can then be used to generate the results 144-e.g., using an engine, such as a decoder, configured to generate results, such as images, from one or more embeddings.

In some implementations, the embedding search engine 142 is configured to perform an approximate nearest neighbor (ANN) index using an inverted file (IVF) algorithm. The IVF algorithm can divide an embedding space into clusters of embeddings, e.g., embeddings representing thousands or millions of items on an exchange platform. Later, at query time, the embedding search engine 142 can identify a nearest subset of clusters to a query embedding-e.g., the search embedding 140. By searching only the nearest subset of clusters, the embedding search engine 142 can reduce search latency with minimal impact on accuracy.

In some implementations, listing images on an exchange platform are indexed in batch offline. A query photo, e.g., included in the search input 132, can be taken by user. Embeddings generated by the searching system 103 using the search input 132 have to occur in real time to provide results to a requesting device. Due to a size of CNN models, it can take a long time to inference on a CPU. To help overcome this problem, the searching system 103 can perform operations, at least in part, using one or more GPUs.

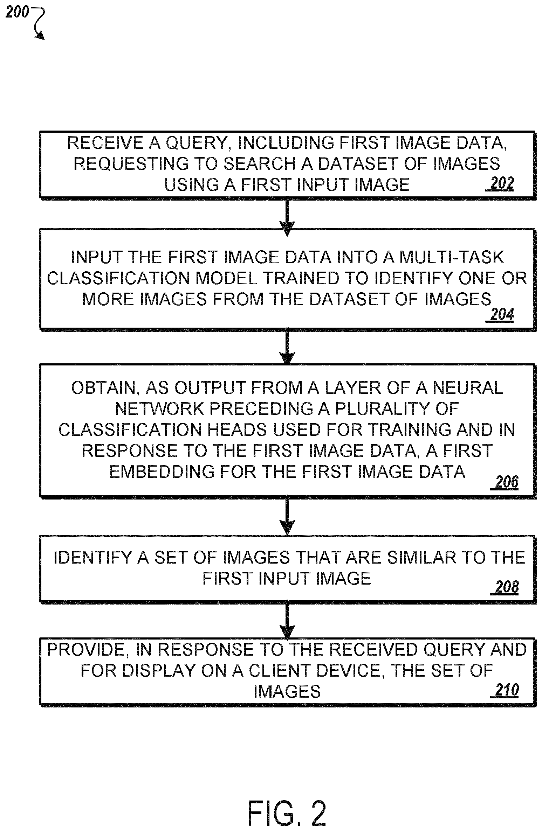

FIG. 2 is a flowchart of an example process 200 for performing a search using a multi-task classification model. For convenience, the process 200 will be described as being performed by a system of one or more computers, located in one or more locations, and programmed appropriately in accordance with this specification. For example, a searching system, e.g., the searching system 103 of FIG. 1, appropriately programmed, can perform the process 200.

The process 200 includes receiving, from a client device, a query requesting to search a dataset of images using a first input image, wherein the query includes first image data for the first input image (202). For example, the client device 130 of FIG. 1 can provide the search input 134 to the searching system 103. The search input 134 can include one or more images-captured by the client device 130.

The process 200 includes inputting the first image data into a multi-task classification model trained to identify one or more images from the dataset of images, e.g., in response to image data for a particular image (204). For example, the multi-task classification model can include one or more models-e.g., the model 108 trained using the task engines 110a-c to classify multiple attributes, such as categories, color, material, among others. The multi-task classification model can include an embedding search engine 142 trained to receive a search embedding, such as the search embedding 140 generated by the trained model 108, to cluster embeddings that are similar and return one or more images.

The process 200 includes obtaining, as output from a layer of a neural network preceding a plurality of classification heads used for training and in response to the first image data, a first embedding for the first image data (206). For example, the embedding search engine 142 can obtain the search embedding 140 generated from the trained model 108.

The process 200 includes identifying, e.g., using the first embedding and from among a plurality of embeddings corresponding to images in the dataset of images, a set of images that are similar to the first input image (208). For example, the embedding search engine 142 can search a set of data items using a comparison of the search embedding 140 to one or more other embeddings each representing one or more data items. In some cases, the embedding search engine 142 performs search by computing a cosine distance of the search embedding 140 one or more, or all, other pre-stored or pre-generated embeddings. The embedding search engine 142 can return a top K most similar embeddings, e.g., ranked by distance. The embedding search engine 142 can determine which data items, such as images, are associated with the K embeddings and returns data representing the data items-e.g., text, an image, thumbnail image, among others.

The process 200 includes providing, in response to the received query and for display on a client device, the set of images (210). For example, the searching system 103 can process the search input 132 to generate the results 144 and then provide results 146 to the client device 130-e.g., generating one or more transmissions to send a message along a communication channel communicably connecting the searching system 103 and the client device 130.

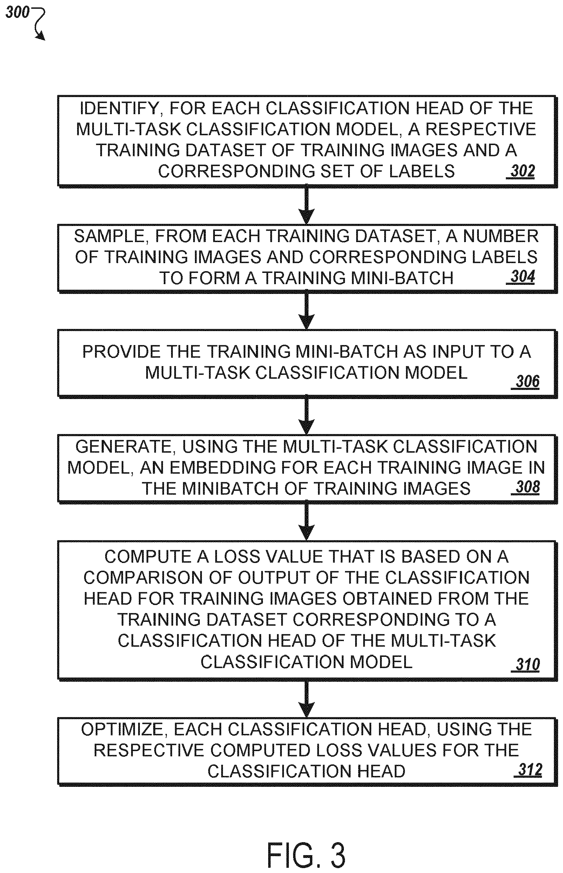

FIG. 3 is a flowchart of an example process 300 for training a multi-task classification model. For convenience, the process 300 will be described as being performed by a system of one or more computers, located in one or more locations, and programmed appropriately in accordance with this specification. For example, a searching system, e.g., the searching system 103 of FIG. 1, appropriately programmed, can perform the process 300.

The process 300 includes identifying, for each classification head and its corresponding classification task, a respective training dataset of training images and a corresponding set of labels, wherein the training datasets are separate and each training dataset is used for training a particular classification head (302). For example, each database of the databases 102a-c can correspond to a task engine included in the task engines 1 10a-c. For example, the first task engine 110a can be configured to classify whether or not an image is a particular color.

The process 300 includes sampling, from each training dataset, a number of training images and corresponding labels to form a training mini-batch (304). For example, the sampler engine 104 can include N items from the first database 102a configured to train the first task engine 1 10a, N items from the second database 102b configured to train the second task engine 110b, and N items from the Nth database 102c configured to train the Nth task engine 110c.

The process 300 includes providing the training mini-batch as input to the multi-task classification model (306). For example, the sampler engine 104 of the searching system 103 can provide the training data 106 to the trained model 108.

The process 300 includes generating, using the multi-task classification model, an embedding for each training image in the mini-batch of training images (308). For example, the trained model 108 can generate the intermediate embedding 109.

The process 300 includes computing, e.g., for each classification head in the plurality of classification heads, a loss value that is based on a comparison of output of the classification head for training images obtained from the training dataset corresponding to the classification head (310). For example, the task engines 110a-c can generate a classification. The loss engine 120 can compute one or more loss values in the results 122.

The process 300 includes optimizing, each classification head in the plurality of classification heads, using the respective computed loss values for the classification head (312). For example, the update engine 124 can update one or more weights or parameters using the results 122. If some layers or weights are frozen, the update engine 124 can update the layers or weights that are not frozen.

In this specification, the term "database" is used broadly to refer to any collection of data: the data does not need to be structured in any particular way, or structured at all, and it can be stored on storage devices in one or more locations.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The subject matter and the actions and operations described in this specification can be implemented in digital electronic circuitry, in tangibly-embodied computer software or firmware, in computer hardware, including the structures disclosed in this specification and their structural equivalents, or in combinations of one or more of them. The subject matter and the actions and operations described in this specification can be implemented as or in one or more computer programs, e.g., one or more modules of computer program instructions, encoded on a computer program carrier, for execution by, or to control the operation of, data processing apparatus. The carrier can be a tangible non-transitory computer storage medium. Alternatively or in addition, the carrier can be an artificially-generated propagated signal, e.g., a machine-generated electrical, optical, or electromagnetic signal, that is generated to encode information for transmission to suitable receiver apparatus for execution by a data processing apparatus. The computer storage medium can be or be part of a machine-readable storage device, a machine-readable storage substrate, a random or serial access memory device, or a combination of one or more of them. A computer storage medium is not a propagated signal.

The term "data processing apparatus" encompasses all kinds of apparatus, devices, and machines for processing data, including by way of example a programmable processor, a computer, or multiple processors or computers. Data processing apparatus can include special-purpose logic circuitry, e.g., an FPGA (field programmable gate array), an ASIC (application-specific integrated circuit), or a GPU (graphics processing unit). The apparatus can also include, in addition to hardware, code that creates an execution environment for computer programs, e.g., code that constitutes processor firmware, a protocol stack, a database management system, an operating system, or a combination of one or more of them.

A computer program can be written in any form of programming language, including compiled or interpreted languages, or declarative or procedural languages; and it can be deployed in any form, including as a stand-alone program, e.g., as an app, or as a module, component, engine, subroutine, or other unit suitable for executing in a computing environment, which environment may include one or more computers interconnected by a data communication network in one or more locations.

A computer program may, but need not, correspond to a file in a file system. A computer program can be stored in a portion of a file that holds other programs or data, e.g., one or more scripts stored in a markup language document, in a single file dedicated to the program in question, or in multiple coordinated files, e.g., files that store one or more modules, sub-programs, or portions of code.

The processes and logic flows described in this specification can be performed by one or more computers executing one or more computer programs to perform operations by operating on input data and generating output. The processes and logic flows can also be performed by special-purpose logic circuitry, e.g., an FPGA, an ASIC, or a GPU, or by a combination of special-purpose logic circuitry and one or more programmed computers.

Computers suitable for the execution of a computer program can be based on general or special-purpose microprocessors or both, or any other kind of central processing unit. Generally, a central processing unit will receive instructions and data from a read-only memory or a random access memory or both. The essential elements of a computer are a central processing unit for executing instructions and one or more memory devices for storing instructions and data. The central processing unit and the memory can be supplemented by, or incorporated in, special-purpose logic circuitry.

Generally, a computer will also include, or be operatively coupled to, one or more mass storage devices, and be configured to receive data from or transfer data to the mass storage devices. The mass storage devices can be, for example, magnetic, magneto-optical, or optical disks, or solid state drives. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

To provide for interaction with a user, the subject matter described in this specification can be implemented on one or more computers having, or configured to communicate with, a display device, e.g., a LCD (liquid crystal display) monitor, or a virtual-reality (VR) or augmented-reality (AR) display, for displaying information to the user, and an input device by which the user can provide input to the computer, e.g., a keyboard and a pointing device, e.g., a mouse, a trackball or touchpad. Other kinds of devices can be used to provide for interaction with a user as well; for example, feedback and responses provided to the user can be any form of sensory feedback, e.g., visual, auditory, speech, or tactile feedback or responses; and input from the user can be received in any form, including acoustic, speech, tactile, or eye tracking input, including touch motion or gestures, or kinetic motion or gestures or orientation motion or gestures. In addition, a computer can interact with a user by sending documents to and receiving documents from a device that is used by the user; for example, by sending web pages to a web browser on a user's device in response to requests received from the web browser, or by interacting with an app running on a user device, e.g., a smartphone or electronic tablet. Also, a computer can interact with a user by sending text messages or other forms of message to a personal device, e.g., a smartphone that is running a messaging application, and receiving responsive messages from the user in return.

This specification uses the term "configured to" in connection with systems, apparatus, and computer program components. That a system of one or more computers is configured to perform particular operations or actions means that the system has installed on it software, firmware, hardware, or a combination of them that in operation cause the system to perform the operations or actions. That one or more computer programs is configured to perform particular operations or actions means that the one or more programs include instructions that, when executed by data processing apparatus, cause the apparatus to perform the operations or actions. That special-purpose logic circuitry is configured to perform particular operations or actions means that the circuitry has electronic logic that performs the operations or actions.

The subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some implementations, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of what is being claimed, which is defined by the claims themselves, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this by itself should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

In some cases, other training methods for training a visual embedding model can be used. A method that includes training a neural network using multitask classification on multiple sets of labels can generate a set of embeddings that encode similar information to the embeddings described in this document. Other methods to generate visual embeddings for use in retrieval or downstream tasks can include: (1) training a model on pairs of similar examples, e.g., using a two-tower architecture and a contrastive loss; (2) training a graph embedding model where graph nodes are represented by images.

Different ways to generate visual embeddings to be used in lieu of or in combination with the embedding system described in this document, e.g., in FIG. 1, include:
Different Model Architecture: Instead of Convolutional Neural Networks, techniques described can be used with simpler Multilayer Perceptron (MLP) architectures or more advanced Vision Transformer (ViT) architectures.

Autoencoders: Autoencoders include an encoder and a decoder. The encoder compresses an input image into a lower-dimensional representation (e.g., an embedding), and the decoder reconstructs the input from this representation.

t-SNE: (t-distributed Stochastic Neighbor Embedding) is an example of a dimensionality reduction technique that can be particularly useful for visualizing high-dimensional data. It can be applied to reduce image features into a 2D or 3D space.

Hashing Techniques: Locality-Sensitive Hashing (LSH) or deep hashing methods can be used to map images to binary codes, which serve as compact embeddings.

Geometric Methods: focus on capturing geometric relationships in images. This can include techniques such as Spatial Pyramid Matching or Bag of Visual Words.

PCA (Principal Component Analysis): a technique applied to reduce a dimensionality of image data, and the resulting principal components can serve as embeddings.

Different ways to generate losses to be used in lieu of or in combination with the loss generating and training techniques described in this document, e.g., Classification Loss and Triplet Loss discussed in reference to FIG. 1, include:
Contrastive Loss: Contrastive loss is used to learn embeddings by minimizing the distance between similar pairs and maximizing the distance between dissimilar pairs. It defines a loss function that penalizes the model when the distance between positive pairs is large and the distance between negative pairs is small.

Margin-based Losses: Hinge loss or margin-based losses, such as the Margin Ranking Loss, focus on creating a margin between positive and negative pairs. The idea is to penalize the model if the margin between positive and negative samples is not satisfied.

N-pair Loss: N-pair loss extends triplet loss to handle multiple positive samples. It encourages the network to produce embeddings where the positive samples are closer to the anchor sample than the negative samples.

Angular Loss: Angular loss aims to learn discriminative embeddings by enforcing a specific angular relationship between samples. It considers the angles between the vectors in the embedding space.

### EMBODIMENTS

Although the present invention is defined in the claims, it should be understood that the present invention can also (alternatively) be defined in accordance with the following embodiments:
1. A computer-implemented method, comprising:
   Receiving, from a client device, a query requesting to search a dataset of images using a first input image, wherein the query includes first image data for the first input image;
   inputting the first image data into a multi-task classification model trained to identify one or more images from the dataset of images in response to image data for a particular image,
      wherein the multi-task classification model is a neural network that includes a plurality of classification heads corresponding to a plurality of classification tasks,
      wherein the multi-task classification model is trained to optimize separate loss functions for each respective classification task, and
      wherein the plurality of classification tasks include one or more classification tasks based on high-resolution images and one or more classification tasks based on low-resolution images;
   obtaining, as output from a penultimate layer of the neural network and in response to the first image data, a first embedding for the first image data; and
   identifying, using the first embedding and from among a plurality of embeddings corresponding to images in the dataset of images, a set of images that are similar to the first input image; and
   providing, in response to the received query and for display on a client device, the set of images.
2. The computer-implemented method of embodiment 1, further comprising:
   generating, using the multi-task classification model, the plurality of embeddings for the images in the dataset of images.
3. The computer-implemented method of embodiment 2, wherein identifying the set of images that are similar to the first input image, comprises:
   computing, using a nearest neighbor algorithm, a respective distance metric between the first embedding and each embedding in the plurality of embeddings;
   identifying a set of embeddings from among the plurality of embeddings for which the corresponding distance metric satisfies a predetermined threshold; and
   determining the set of images corresponding to the identified set of embeddings.
4. The computer-implemented method of embodiment 3, wherein identifying the set of embeddings from among the plurality of embeddings for which the corresponding distance metric satisfied the predetermined threshold, comprises one of:
   identifying the set of embeddings with top-N distance metrics from among the computed distance metrics, wherein N is the predetermined threshold and N is an integer greater than 1, or
   identifying the set of embeddings with respective distance metrics that each meet or exceed the predetermined threshold.
5. The computer-implemented method of embodiment 1, wherein the plurality of classification tasks comprise a low-resolution image-based fine-grained taxonomy classification and at least one or more of:
   a fine-grained taxonomy classification;
   a top-level taxonomy classification; and
   a primary color classification.
6. The computer-implemented method of embodiment 5, wherein the low-resolution image-based fine-grained taxonomy classification is fine-grained taxonomy classification based on user-uploaded images (e.g., in reviews) as opposed to professional images uploaded by a platform.
7. The computer-implemented method of embodiment 5, further comprising training the multi-task classification model, comprising:
   identifying, for each classification head and its corresponding classification task, a respective training dataset of training images and a corresponding set of labels, wherein the training datasets are disjoint and each training dataset has training images with unique set of labels;
   sampling, from each training dataset, an equal number of training images and corresponding labels to form a training mini-batch;
   providing the training mini-batch as input to the multi-task classification model;
   generating, using the multi-task classification model, an embedding for each training image in the minibatch of training images;
   computing, for each classification head in the plurality of classification heads, a loss value that is based on a comparison of output of the classification head for training images obtained from the training dataset corresponding to the classification head; and
   optimizing, each classification head in the plurality of classification heads, using the respective computed loss values for the classification head.
8. The computer-implemented method of embodiment 7, wherein the loss value is computed using a sparse categorical cross entropy function.
9. The computer-implemented method of embodiment 7, wherein the multi-task classification model comprises:
   an EfficentNet or ResNext-based neural network;
   a separate classification head for each classification task; and
   a softmax activation for each respective classification head.
10. A computer-implemented method for training a multi-task classification model, wherein the multi-task classification model is a neural network that includes a plurality of classification heads corresponding to a plurality of classification tasks, and is trained to optimize separate loss functions for each respective classification task, wherein the training comprises:
   identifying, for each classification head and its corresponding classification task, a respective training dataset of training images and a corresponding set of labels, wherein the training datasets are disjoint and each training dataset has training images with unique set of labels;
   sampling, from each training dataset, an equal number of training images and corresponding labels to form a training mini-batch;
   providing the training mini-batch as input to the multi-task classification model;
   generating, using the multi-task classification model, an embedding for each training image in the minibatch of training images;
   computing, for each classification head in the plurality of classification heads, a loss value that is based on a comparison of output of the classification head for training images obtained from the training dataset corresponding to the classification head; and
   optimizing, each classification head in the plurality of classification heads, using the respective computed loss values for the classification head.
11. The computer-implemented method of embodiment 10, wherein the loss value is computed using a sparse categorical cross entropy function.
12. A system, comprising:
   one or more memory devices storing instructions; and
   one or more data processing apparatus that are configured to interact with the one or more memory devices, and upon execution of the instructions, perform operations recited in embodiments 1-11.
13. A non-transitory computer readable medium storing instructions that, when executed by one or more data processing apparatus, cause the one or more data processing apparatus to perform operations recited in embodiments 1-11.

### APPENDIX A - FROM IMAGE CLASSIFICATION TO MULTITASK MODELING: BUILDING ETSY'S SEARCH BY IMAGE FEATURE

### By Eden Dolev, Alaa Awad

Etsy recently announced the arrival of a powerful new image-based discovery tool on Etsy's iOS mobile app. The ability to Search by image gives buyers the opportunity to search the Etsy marketplace using their own photos as a reference. Tap the camera icon in the search bar to take a picture, and in a fraction of a second we'll surface visually similar results from our inventory of nearly 100 million listings. Searching by image is being rapidly adopted throughout the e-commerce industry, and nowhere does it make more sense than on Etsy, where the uniqueness of our sellers' creations can't always be expressed easily with words. In this post we'll give you a look at the machine-learning architecture behind our Search by image feature and the work we did to evolve it.

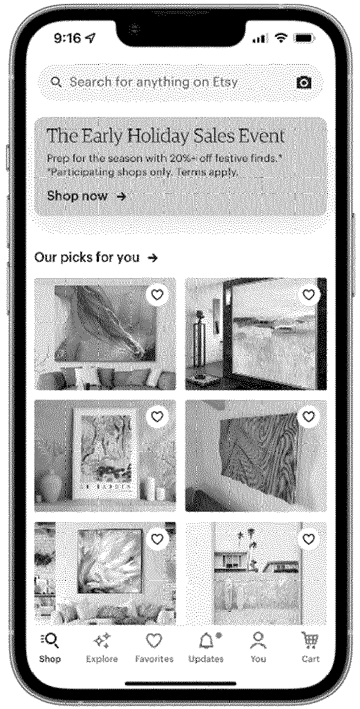

### OVERVIEW

In order to search a dataset of images using another image as the query, we first need to convert all those images into a searchable representation. Such a representation is called an embedding, which is an array of numbers - or a dense vector - existing in some relatively low n-dimensional space. Once we have the embedding of our query image, and given the precomputed embeddings for our dataset of candidate images, we can use any geometric distance metric to look up the closest set of candidates to our query. This type of search algorithm is often referred to as a *nearest-neighbor* search.

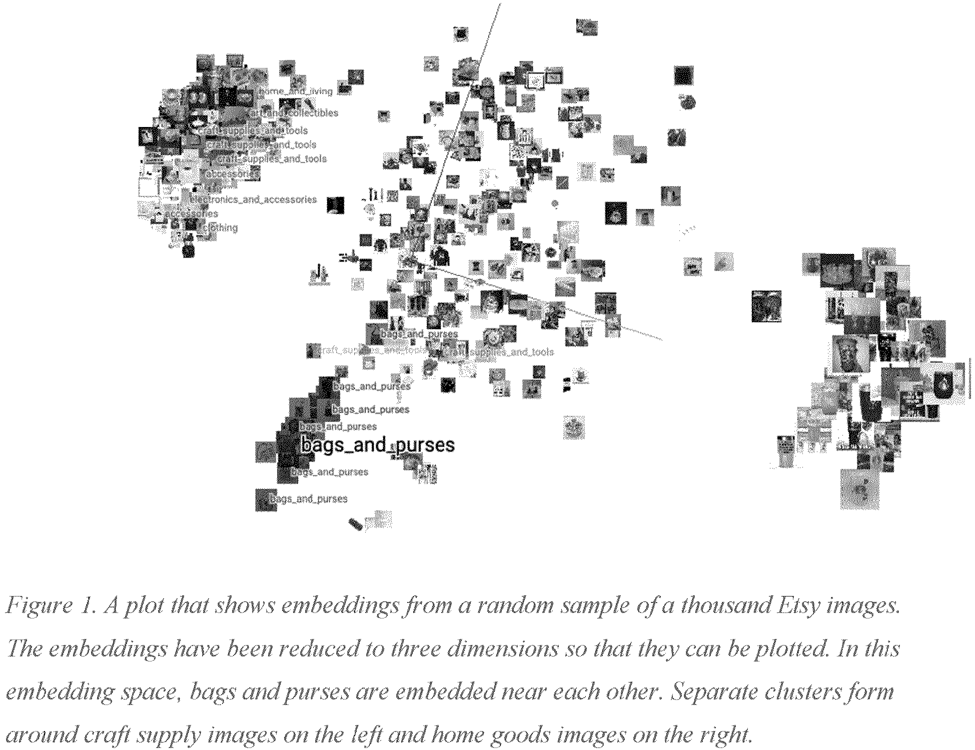

At a high level, the visual retrieval system works by using a machine learning model to convert every listing's image into an embedding. The embeddings are then indexed into an approximate nearest-neighbor (ANN) system which scores a query image for similarity against Etsy's image embeddings in a matter of milliseconds.

### MULTITASK VISION MODEL

To convert images to embeddings we use a convolutional neural network (CNN) that has been trained on Etsy data. We can break our approach into three components: the model architecture, the learning objective, and the dataset.

### MODEL ARCHITECTURE

Training the entire CNN from scratch can be costly. It is also unnecessary as the early layers of a pretrained CNN can be shared and reused across new model tasks. We leveraged a pre-trained model and applied transfer learning to fine-tune it on Etsy data. Our approach was to download pre-trained weights into the model and replace the "head" of the model with one for our specific task. During training, we then "freeze" most of the pre-trained weights, and only optimize those for the new classification head as well as for the last few layers of the CNN. The particular pre-trained model we used is called EfficientNet (https://arxiv.org/abs/1905.11946): a family of CNNs that have been tuned in terms of width, depth, and resolution, all to achieve optimal tradeoffs between accuracy and efficiency.

### LEARNING OBJECTIVE

A proven approach to learning useful embeddings is to train a model on a classification task as a proxy. Then, at prediction time, extracting the penultimate layer just before the classification head produces an embedding instead of a classification probability. Our first attempt at learning image embeddings was to train a model to categorize product images. Not surprisingly, our tests showed that these embeddings were particularly useful in surfacing candidates from the same taxonomy. Often though the results were not "visually cohesive": items were surfaced that didn't match well with the query image in color, material or pattern.

To mitigate this problem we switched to a deep metric learning approach utilizing triplet loss. In this approach, the model is trained on triplets of examples where each triplet consists of an anchor, a positive example, and a negative example. After generating an embedding for each of the three examples, the triplet loss function tries to push the anchor and positive examples closer together, while pushing the negative example farther away. In our case, we used pairs of images from the same item as the anchor and positive examples, and an image from a different listing as the negative example. With these triplet embeddings, tests showed that our candidates were now visually cohesive, displaying similar colors and patterns.

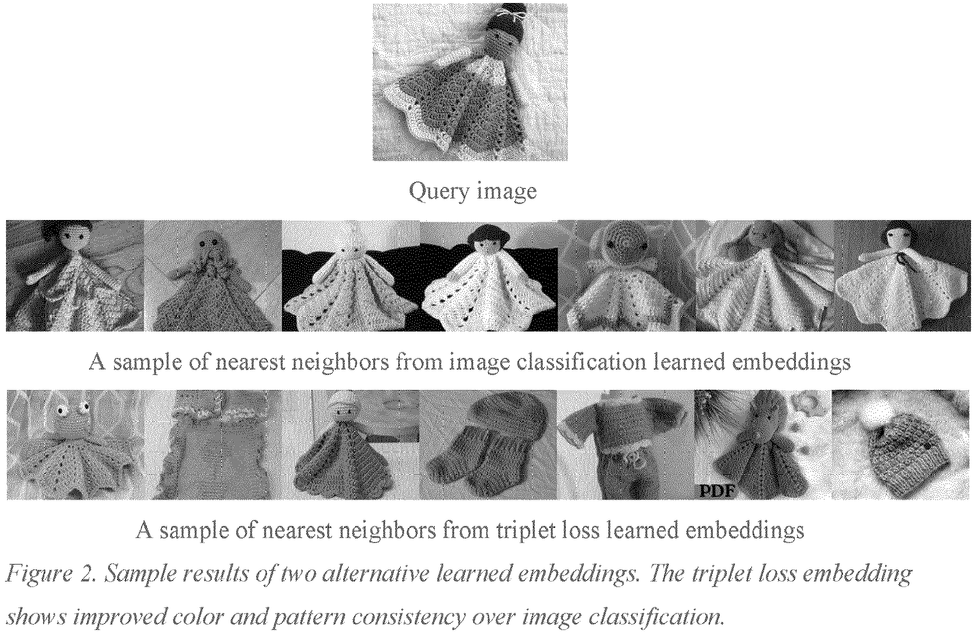

But these embeddings lacked categorical accuracy compared to the classification approach. And the training metrics for the triplet approach offered less observability, which made it harder for us to assess the model's learning progress than with classification.

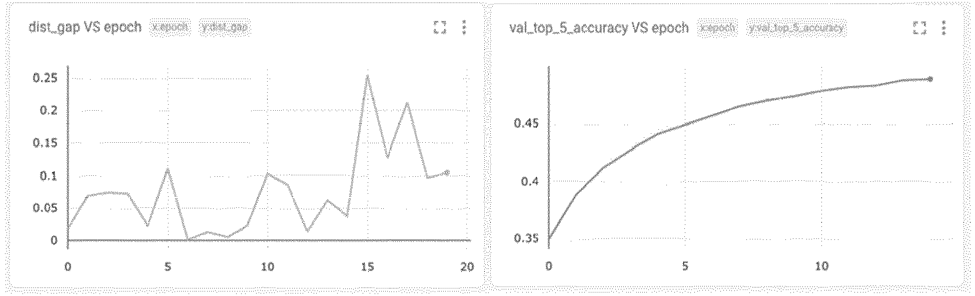

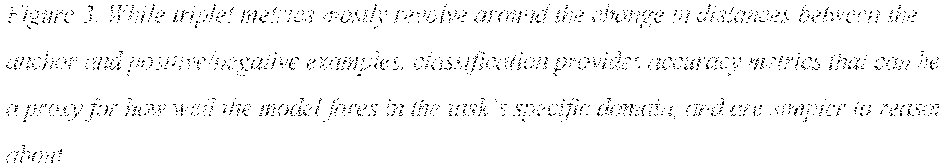

Taxonomy is not something we can tolerate our model being sloppy about. Since classification had already proven its ability to retrieve items of the same type, we decided to see if a multitask classification approach could be made to produce visually consistent results.

Instead of having a single classification head on top of the pre-trained model, we attach separate heads for multiple categorization tasks: Item category (e.g. accessories, home & living), fine-grained item category (belt buckles, dining chairs), primary color, and other item attributes. Loss and training/evaluation metrics are then computed for each task individually while the embedding weights are shared across all of them.

One challenge we faced in implementing this approach was that some optional seller input attributes, such as item color and material, can be sparse. The more tasks we added, the harder it was for us to sample training data equally across classes. To overcome this limitation we implemented a data sampler that reads from entirely disjoint datasets, one for each task, and each with its own unique set of labels. At training time, the sampler combines an equal number of examples from each dataset into every minibatch. All examples then pass through the model, but loss from each classification head is calculated only for examples from the head's corresponding source dataset.

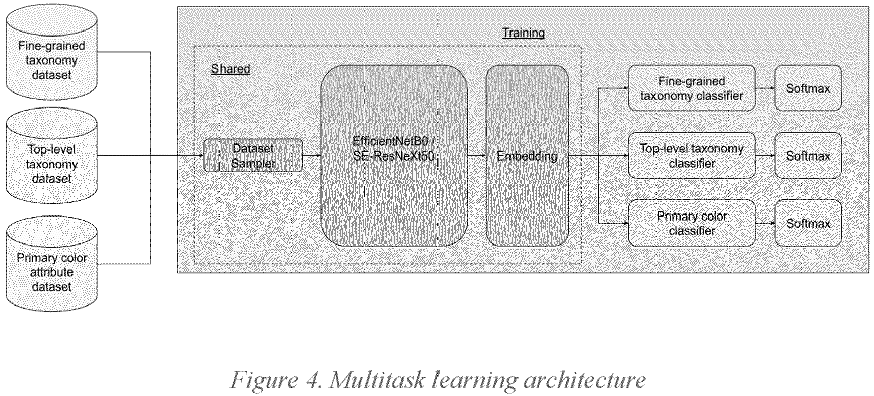

Returning to the classification paradigm meant that we could once again rely on accuracy metrics as a proxy for gauging and comparing models' understanding of the domain of each task. This greatly simplifies the process of iterating and improving the model.

### DATASET

The embeddings produced by multitask classification were now encapsulating more information about the visual attributes we added tasks for. This meant that when we searched using an embedding of some Etsy listing image, our results were both categorically and visually cohesive.

However, when we talk about Search by image, we're not expecting users to search from Etsy listing photos - the whole point of this is that the user is holding a camera. Photos uploaded by sellers are typically high quality, have professional lighting, and are taken over a white or premeditated background. But photos from a user's phone might be blurry, or poorly lit, or on a diversity of backgrounds that distract from the object the user is searching for.

Deep learning is a powerful and useful tool, but training deep learning models is highly susceptible to biases in the data distribution, and training on seller-provided product images was biasing us away from user photos. Fortunately, Etsy allows users to post reviews of items they've purchased, and those reviews can have photos attached: photos taken by buyers, often with their phone cameras, very much like the images we expect to see used when searching by image. So we plugged in an additional classification task using the dataset of review photos, expanding the distribution of images our model learns about in training. And indeed with this new component in place we saw significant improvement in the model's ability to surface visually relevant results.

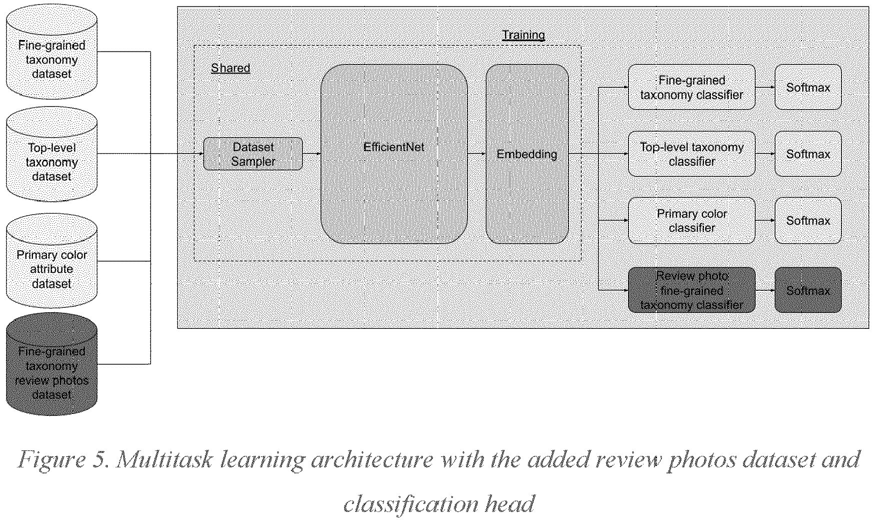

### INFERENCE PIPELINE AND SERVING

Our inference pipeline is an orchestrated ensemble of data processing jobs that turns the entire Etsy inventory of nearly 100M active listings into a searchable framework. We construct an approximate nearest neighbor (ANN) index using an inverted file (IVF) algorithm. The IVF algorithm divides the embedding space into clusters of listings. Later, at query time, we only look at the nearest subset of clusters to the query embedding, which greatly reduces search latency while only marginally impairing accuracy.

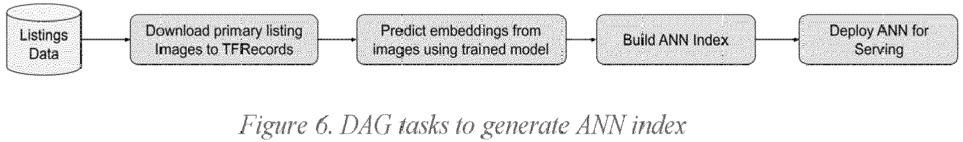

While the listing images are indexed in batch offline, the query photo is taken by users on the fly, so we have to infer those in real time - and fast. Due to the size of CNN models, it can take a long time to inference on a CPU. To overcome this hurdle we partnered with Etsy's ML platform team to bring the first use case of real-time GPU inferencing at Etsy.

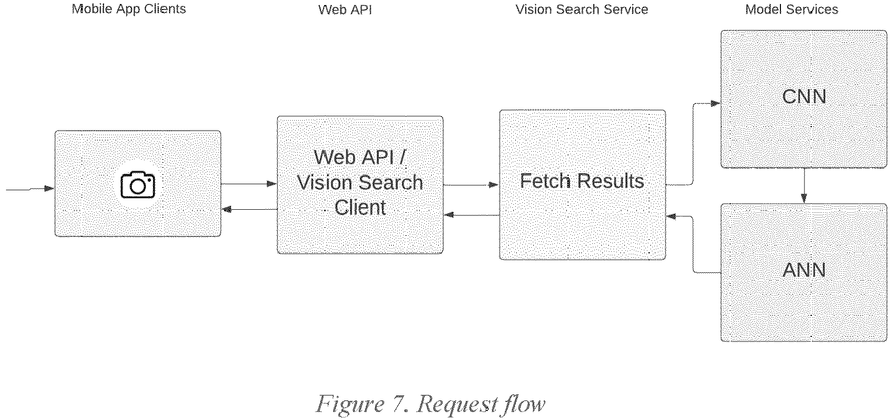

We hope this feature gives even more of our buyers a new way to find exactly what they're looking for on Etsy. So, the next time you come across something you love, snap a photo and Search by image on Etsy!

### ACKNOWLEDGEMENTS

This project started as part of CodeMosaic, Etsy's annual "hackathon" week, where engineers can practice new skills and drive projects not necessarily related to their day-to-day work. We're proud that we were able to take a proof-of-concept hackathon project, and turn it into a production feature to help make the millions of unique and special items on Etsy more discoverable for buyers. In particular, we'd like to thank the App Core Experience team for taking a chance and prioritizing this project. We could not have done it without the buy-in of leadership and help from our engineering enablement teams. More on this in our next article!

### APPENDIX B - MULTITASK LEARNING

### MOTIVATION

We embarked on the visual similarity project to improve ad listing page retrieval. In particular, our hypothesis was that surfacing listings with images that share similar features with the source listing will translate to more clicks/conversions.

### WHAT WE DID BEFORE

### V1 - CLASSIFICATION

In our visual similarity V1 we applied a classification approach by training a model on taxonomy classification, where we classify a listing hero image to the listing's respective taxonomy. Offline metrics clearly show that taxonomy information is learned when training this model. Manual retrieval tests using nearest neighbor search on embeddings extracted from this model show the embeddings encode the taxonomy signal well for most examples. However, it was evident that retrieved images were not necessarily displaying "similar" looking items, but instead items that are only of the same or similar category. The embeddings produced by the classification model do not seem to capture information about color, patterns, and other traits a human would likely consider when determining if images are similar.

The dataset used to train this model uses a single image per listing (the "hero" image) as the example, and the listing's taxonomy as the label. We sampled examples from -1000 of our 3600 taxonomies.

When we ran an online experiment on 2nd pass candidates, as expected results often didn't look more "similar" than in our non-visual control. However, we did see a win in online business metrics, which motivated us to keep iterating on the approach.

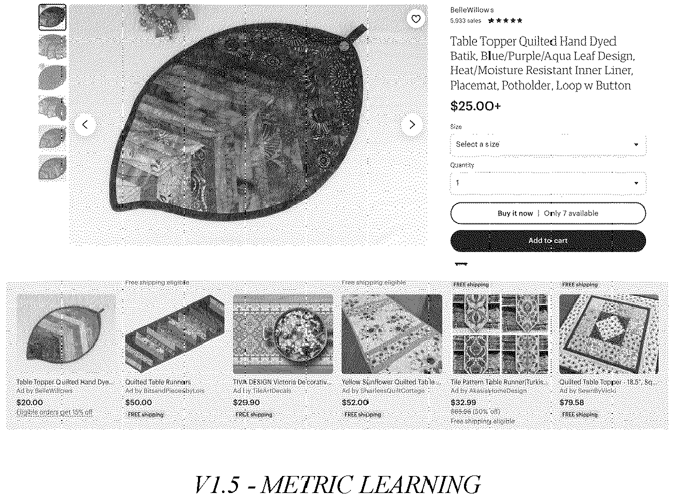

For our following iteration (for which we are currently running an online experiment) we switched our modeling objective from classification to metric learning, using a triplet loss. This approach directly tries to model the similarity objective directly by constructing triplets of anchor, positive and negative examples, and learning from a loss function that incorporates the difference between the distance of the anchor to the positive example, and the distance of the anchor to the negative example.

Unlike the V1 classification task, where the learned dataset had a single image per listing as the example, and the respective listing's taxonomy as the label - this model learns from a dataset where we have multiple images (4-8) per listing, and the "label" is the listing id (see spike doc for how the implementation of online triplet mining works). Our hypothesis was that the different images of the same product images would be good positive examples for triplets. This type of dataset would likely not be suitable for standard classification since the number of examples per class is small and the cardinality of classes too large (up to 100M listings).

We are still awaiting the experiment results, but manual QA shows this approach does much better in producing embeddings which encode what we deem to be visual similarity - items of similar colors, patterns, often shape.

On the other hand, our results show that same-taxonomy retrieval is lacking with this model, compared to the classification approach (not surprisingly). Another significant downside with metric learning is that training is more difficult to interpret; unlike classification, which provides convenient offline metrics such as accuracy, top-k-accuracy, auc, etc., in metric learning we mostly rely on the training/validation loss, triplet distance metrics (how the distances between the anchor and positive/negative examples changes along training). We invested in implementing some tooling around adding both quantitative (retrieval recall) and qualitative metrics (visualization app). However, this aspect of metric learning remains a challenge.

Finally, the online triplet mining approach we apply during training is a relatively expensive process that adds complexity to training and the data pipeline.

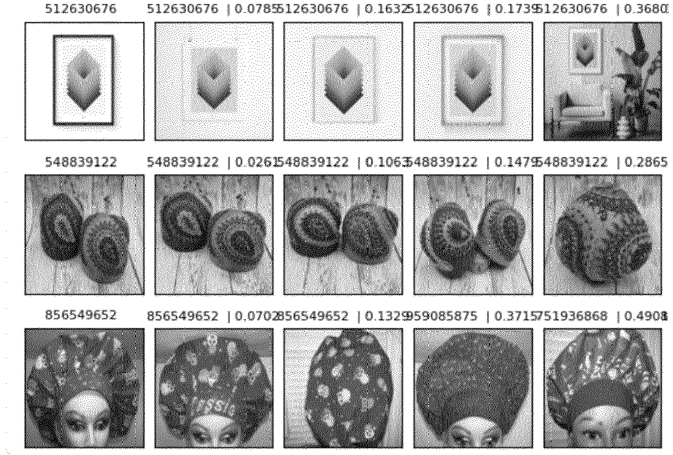

### DATASETS

My thinking for the spike was to start with the "lowest hanging fruit" that can help us model "similarity" via classification. To this end my hypothesis was that compounding the categorical signal we already proved can be learned from taxonomy classification, with one or more attribute datasets (easily attainable via bigquery tables), would embed the visual features we feel are missing with pure taxonomy classification. In other words, if classifying the fine-grained taxonomy node enables us to retrieve images from the same or similar categories, then maybe learning additional classification tasks such as color/shape/material/other levels of taxonomy will help us retrieve better results in those contexts as well.

### EXPLORATION

Before embarking on the modeling work, we did some data exploration to gauge the class cardinalities and distributions of different potential taxonomy+attribute datasets. I summarized the findings in an earlier document.

### APPROACHES

### SINGLE DATASET, JOIN ON LABELS

The most straightforward approach to combine taxonomy with other attribute labels is joining each desired label in bigquery on the listing id, into a single dataset. This way we can get away with generating a single dataset using a single query, reading it into the model similarly to how we did for our old standalone classification model, and have all labels available for each example. However, because attribute data can be relatively sparse, the more labels/attributes we try to join together - the more examples we lose and the smaller classes become. To overcome this particular limitation we could do a one sided join and keep some labels missing (ignoring gradient updates), but it would be difficult to control and anticipate class sizes this way. This approach also limits us to having to use joinable data, so for example it would be more difficult to include a different dataset such as our same-listing dataset.

### UNION MULTIPLE DATASETS

We propose unioning of different datasets. This way we could train models on any arbitrary combination of labels, by reading in disjoint datasets. For training we used a gradient behavior, by setting missing labels to a sentinel value and implementing custom wrappers for the loss and metric classes which set the loss to zero when encountering the placeholder label.

The main advantage of this approach is modularity. Task-specific datasets can be generated separately and plugged in by simply adding the path to the list of input datasets.

### TRAINING IMPLEMENTATION

### ARCHITECTURE

I ran one set of experiments using the following architecture and hyperparameters (except I used SE-ResNeXt50 to speed up training), and another set of experiments using a similar configuration to what we have for our old taxonomy classification model (fine tuning the final layers of an EfficientNetB0).

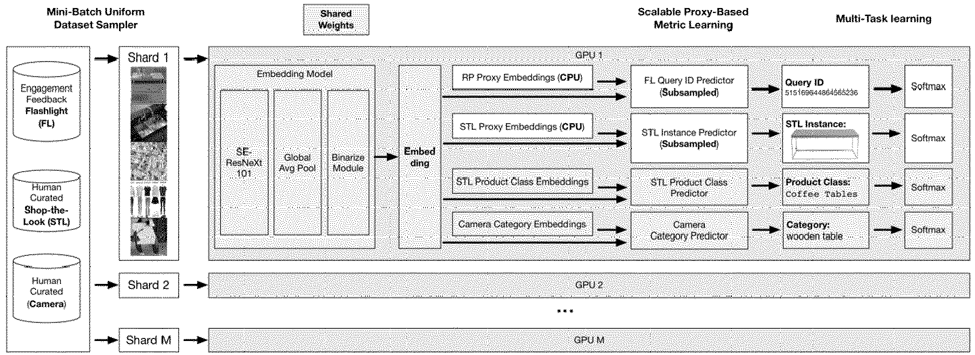

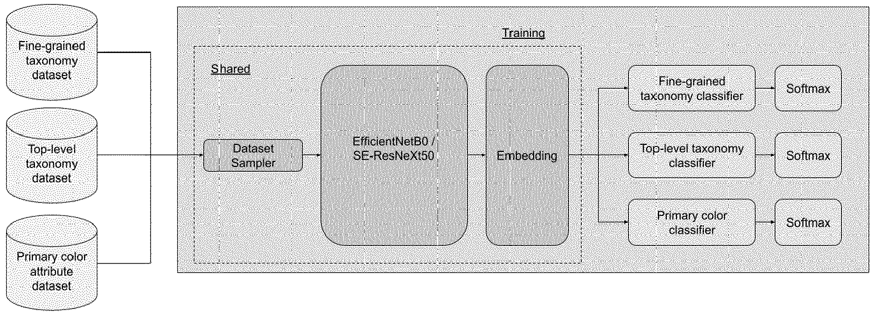

### Our Architecture

The first model was trained with an SGDW optimizer, with a batch size of 64 and a learning rate of 0.08 (0.01 per GPU used), with a "gamma" of 0.1 applied every 3 epochs for 9 epochs (dividing the learning rate by 10 every 3 epochs). We were mostly able to adhere to these hyperparameters when training SE-ResNeXt50 end-to-end. The one exception being, even when adjusting the learning rate for the batch size, we had to use an order of magnitude lower learning rate to avoid NaN loss. Another unexpected behavior was when we applied a learning rate schedule: at the epochs where the scheduler decreases the learning rate, validation loss goes up.

### DATASET

We tried a few taxonomy-attribute combinations before finally landing on the following three classification tasks: top level taxonomy, fine grained taxonomy and primary color.

Each task dataset contains ∼450K training examples and ~50K eval examples, so the full 3-task dataset contains a total of ~1.5M examples. Both the top-level taxonomy and primary color dataset examples are split into 15 classes, whereas the fine grained taxonomy is split into 1000 classes (same as our standalone taxonomy classification model).

We implemented the sampler such that any datasets can be plugged in easily by adding the dataset path to a parameter with the list of input datasets. One caveat is that currently the sampler requires all datasets to have roughly the same number of examples (it will truncate all datasets to the size of the smallest dataset). The sampler makes sure each batch has a uniform representation of all task datasets by interleaving examples from all datasets before batching. The final tf.Dataset contains the example and a "label {i}" key for each of the tasks, where invalid example labels are filled with a placeholder value.

### METRICS AND LOSS

We logged task-specific versions of our usual classification metrics: categorical accuracy and top 5 accuracy. For loss we used sparse categorical cross entropy. For both metrics and the loss we implemented custom wrapper classes around the standard tensorflow library in order to ignore gradient updates for examples which are invalid for a given task. Each of the wrapper classes simply calls the follow _gather_valid_indexes() function to remove invalid examples for the given task's metric/loss, and then goes on to call the parent's standard 'call' function (example).

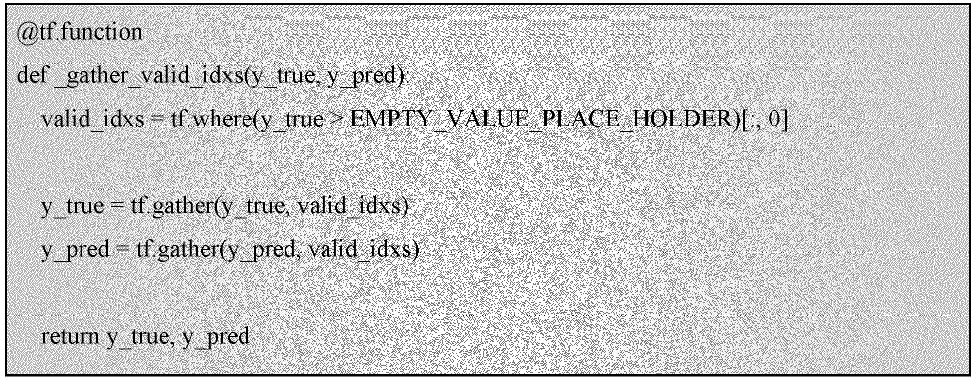

### SUB SAMPLING MODULE

We attempted to implement a subsampling module we could use to classify datasets with a high cardinality of classes (see Possible Next Steps section below for more information). The experiments below do not include this module.

### RESULTS

### EXPERIMENTS

Blue: fine tuned EfficientNetB0, with LR Schedule
Yellow: End-to-end trained SE-ResNeXt50, no LR Schedule
Red: End-to-end trained SE-ResNeXt50, with LR Schedule

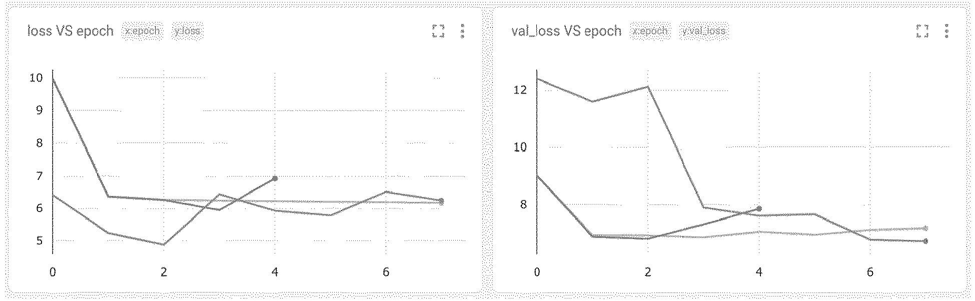

### Train and validation losses (combined for all tasks)

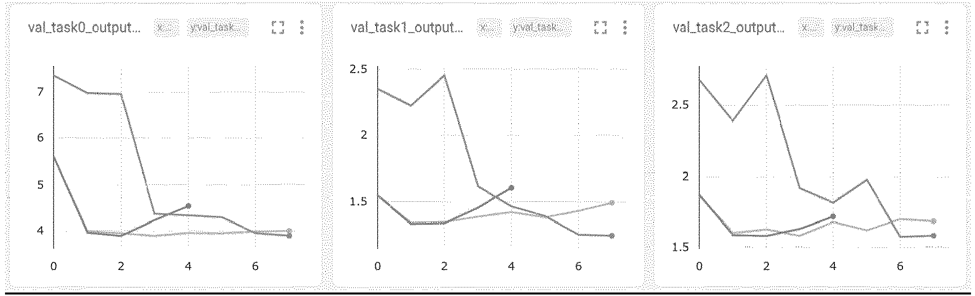

### Task validation losses

### Left to right: fine-grained taxonomy, primary color, top-level taxonomy

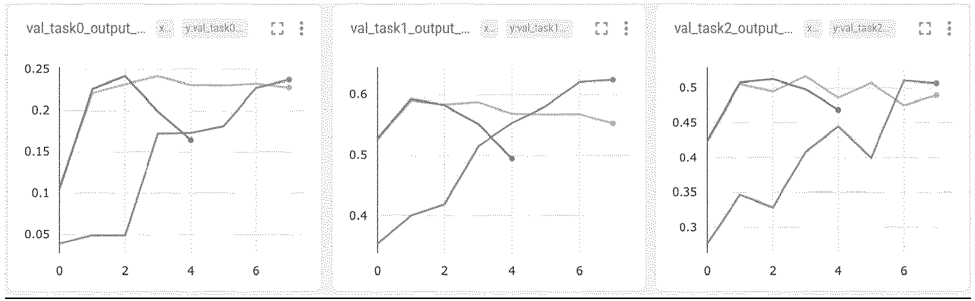

### Task validation top categorical accuracy

### Left to right: fine-grained taxonomy, primary color, top-level taxonomy

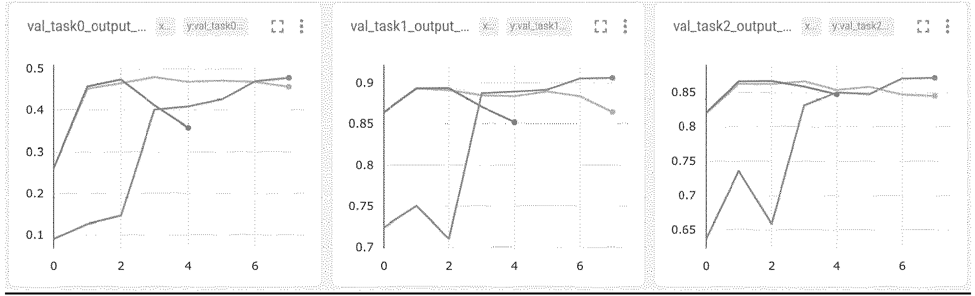

### Task validation top 5 accuracy

### Left to right: fine-grained taxonomy, primary color, top-level taxonomy

The red and yellow experiments are trained with configuration closest to that of the first model above, the only difference between them is that red applies a learning rate scheduler. Looking at the red line, when the learning rate decreases (epoch 3), both the training and validation loss start increasing and the model overfits. The yellow experiment more or less converges around the inflection point of the red experiment.

The blue experiment uses a configuration similar to what we used for our standalone taxonomy classification project and fine tunes a EfficientNetB0 model. It also applies the same learning rate schedule as the red experiment. This model learns slower than the end to end models (in regard to number of epochs), but is able to achieve eventual higher accuracies (the charts suggest it may be able to improve further with more epochs).

In all experiments validation accuracy is increasing throughout training for all tasks, so the model is clearly learning. The fine-grained taxonomy accuracy and top-5 accuracies hover around 23% and 50% respectively (for 1000 classes). These validation metrics appear to be the same, or slightly better, than our standalone taxonomy classification model. However, note that the datasets and classes may slightly differ so these are not directly comparable. In the best performing experiment (blue) the primary color and top level taxonomy tasks achieve 62% and 50% categorical accuracies respectively (15 classes).

### VISUALIZATIONS

To get some qualitative comparison, we went through our full candidate set generation pipeline with all 100M active listings to generate visualizations for all types of models.

During our V1 and V1.5 experiments we've identified two (somewhat subjective) measures that factor into qualitative assessment of visual retrieval: similarity and relevance. Our old taxonomy classification model performs well in terms of relevance, in that it more often than not retrieves images from the same or a similar taxonomy as the query. On the other hand, it often doesn't retrieve what we'd deem visually "similar" results. The triplet model has shown opposite results, retrieving candidates that have visual cohesion with the query, but sometimes are of unrelated categories.

By looking at the sample of retrieved candidates, I think overall retrieval using multitask classification embeddings performs as well as standalone taxonomy in terms of relevance, and better than it in terms of "similarity" or "visual cohesion". It does not seem to me to perform as well in similarity as our triplet model. However, given our V1.5 experiment results, which suggest buyers may not be interested in clicking on near-identical items from the listing page, perhaps multitask embeddings can provide a more appealing tradeoff between relevance and similarity for the buyers.

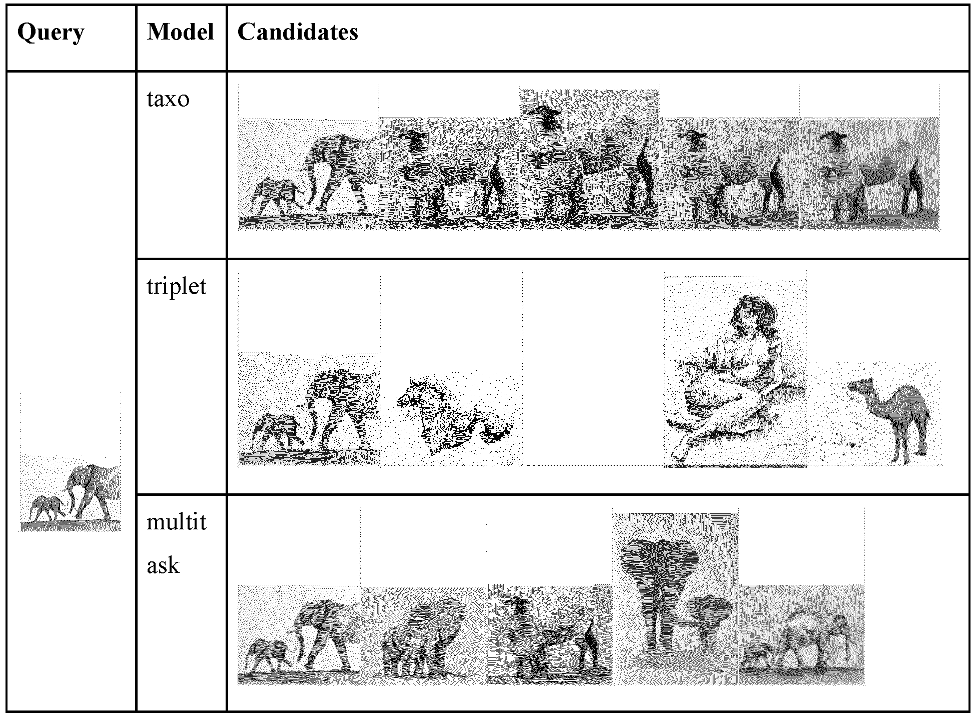

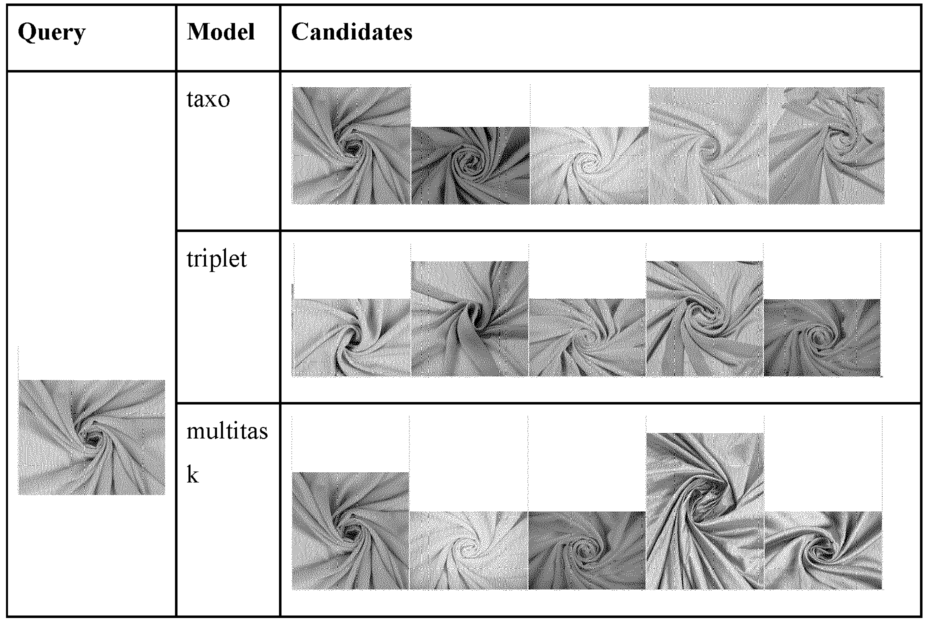

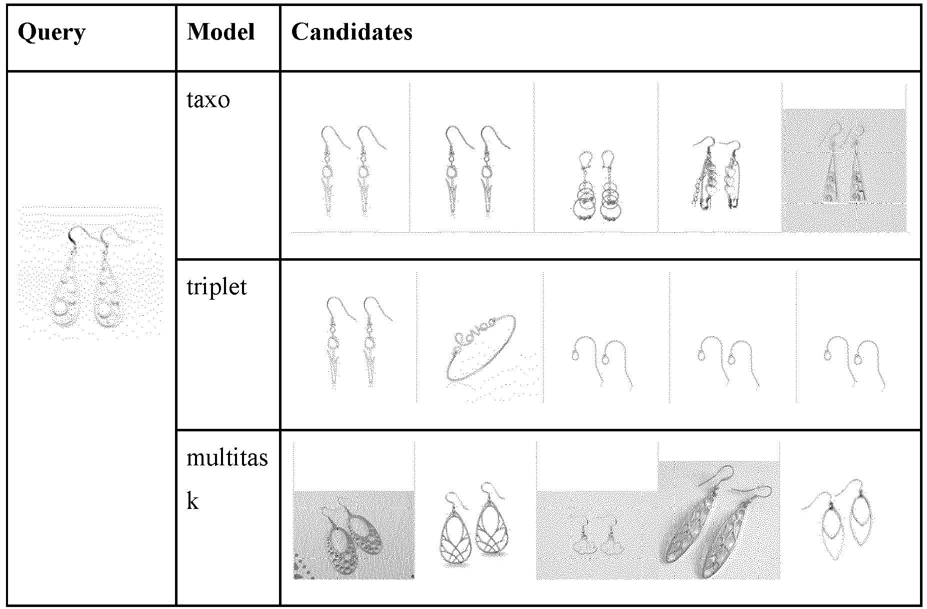

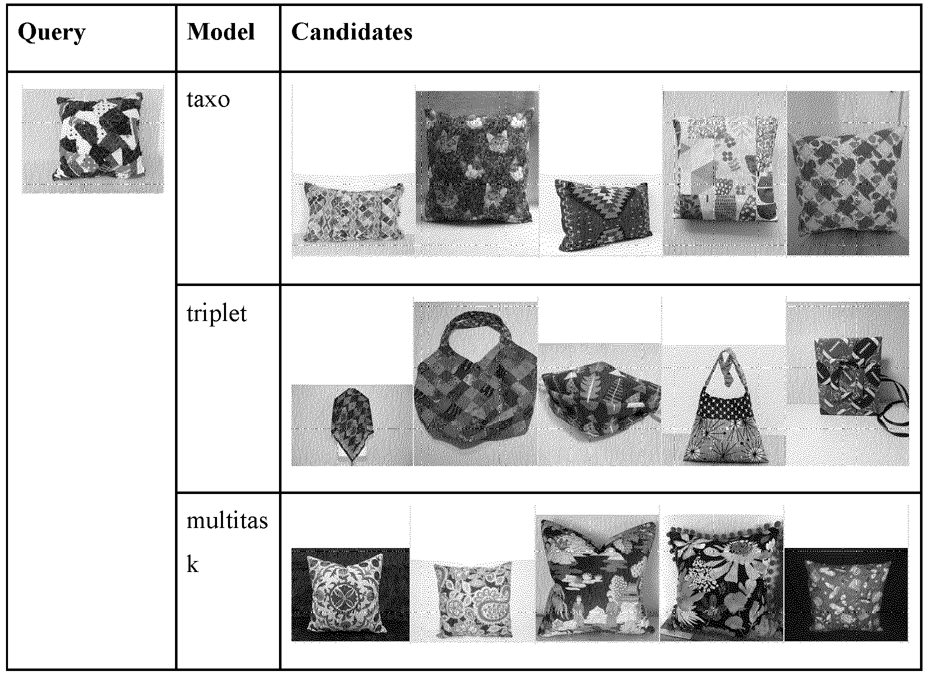

### CONCLUSION

We think multitask classification is an interesting avenue. Offline classification metrics indicate the model is able to learn as well as, or better than single task classification. Qualitative assessment of visualizations suggests this type of model may give us a more favorable tradeoff between visual cohesion and relevance than our triplet model.

### POSSIBLE NEXT STEPS

Iterating on any similarity model is almost an intractable problem when we rely solely on manual, qualitative comparisons and online experiments. The nice thing about classification is that we have more trust in the proxy offline metrics and observability tools of this training objective (accuracy, confusion matrices, etc.) and thus can more confidently iterate on modeling.

### DATASET

For this paper, we tried training on the tasks of fine-grained taxonomy, top-level taxonomy and primary color classification. There are other visual attributes we can likely learn from such as shape, material, style, etc. Iterating on any dataset that can be generated from bigquery should be very straightforward, as the above implementation takes an arbitrary number of independently generated datasets.

Two other datasets that the above would likely benefit from are the same-listing dataset (similar to what we use to train our triplet model) and an engagement based dataset (i.e. cluster images into ones that have been clicked together for the same query/source listings).

### MODEL

We may want to explore other models, end-to-end training, fine tuning of hyperparameters, etc.

## Claims

1. A method, comprising:
receiving (202), from a client device, a query requesting to search a dataset of images using a first input image, wherein the query includes first image data for the first input image;
inputting (204) the first image data into a multi-task classification model trained to identify one or more images from the dataset of images in response to image data for a particular image,
wherein the multi-task classification model is a neural network that is trained using a plurality of classification heads corresponding to a plurality of classification tasks,
wherein the multi-task classification model is trained using separate loss functions for each respective classification task, and
wherein the plurality of classification tasks includes one or more classification tasks based on separate training datasets;
obtaining (206), as output from a layer of the neural network preceding the plurality of classification heads used for training and in response to the first image data, a first embedding for the first image data;
identifying (208), using the first embedding and from among a plurality of embeddings corresponding to images in the dataset of images, a set of images that are similar to the first input image; and
providing (210), in response to the received query and for display on a device, the set of images.

2. The method of claim 1, further comprising:
generating, using the multi-task classification model, the plurality of embeddings for the images in the dataset of images.

3. The method of claim 2, wherein identifying the set of images that are similar to the first input image, comprises:
computing, using a nearest neighbor algorithm, a respective distance metric between the first embedding and each embedding in the plurality of embeddings;
identifying a set of embeddings from among the plurality of embeddings for which the corresponding distance metric satisfies a predetermined threshold; and
determining the set of images corresponding to the identified set of embeddings.

4. The method of claim 3, wherein identifying the set of embeddings from among the plurality of embeddings for which the corresponding distance metric satisfied the predetermined threshold, comprises one of:
identifying the set of embeddings with top-N distance metrics from among the computed distance metrics, wherein N is the predetermined threshold and N is an integer greater than 1, or
identifying the set of embeddings with respective distance metrics that each meet or exceed the predetermined threshold.

5. The method of any one of claims 1 to 4, wherein the plurality of classification tasks comprises a low-resolution image-based fine-grained taxonomy classification and at least one or more of:
a fine-grained taxonomy classification;
a top-level taxonomy classification; and
a primary color classification.

6. The method of claim 5, wherein the low-resolution image-based fine-grained taxonomy classification is fine-grained taxonomy classification based on user-uploaded images as opposed to professional images uploaded by a platform.

7. The method of claim 5, further comprising training the multi-task classification model, comprising:
identifying, for each classification head and its corresponding classification task, a respective training dataset of training images and a corresponding set of labels, wherein the training datasets are separate and each training dataset is used for training a particular classification head;
sampling, from each training dataset, a number of training images and corresponding labels to form a training mini-batch;
providing the training mini-batch as input to the multi-task classification model;
generating, using the multi-task classification model, an embedding for each training image in the mini-batch of training images;
computing, for each classification head in the plurality of classification heads, a loss value that is based on a comparison of output of the classification head for training images obtained from the training dataset corresponding to the classification head; and
optimizing, each classification head in the plurality of classification heads, using the respective computed loss values for the classification head.

8. The method of claim 7, wherein sampling, from each training dataset, a number of training images and corresponding labels to form a training mini-batch comprises:
sampling an equal number, for each classification head, of training images and corresponding labels from each training dataset.

9. The method of claim 7, wherein the loss value is computed using a sparse categorical cross entropy function.

10. The method of claim 7, wherein the multi-task classification model comprises:
an EfficientNet or ResNext-based neural network;
a separate classification head for each classification task; and
a softmax activation for each respective classification head.

11. The method of claim 7, wherein optimizing, each classification head in the plurality of classification heads, using the respective computed loss values for the classification head comprises:
identifying an index value of a given training image and label;
determining the index value is a valid index value for a first classification head; and
in response to determining the index value is a valid index value for the first classification head, optimizing the first classification head using a loss value computed using the given training image and label.

12. The method of claim 11, wherein determining the index value is a valid index value for the first classification head comprises:
determining the index value is included in a set of valid index values for the first classification head.

13. A system comprising one or more computers and one or more storage devices on which are stored instructions that are operable, when executed by the one or more computers, to cause the one or more computers to perform operations according to the methods of any one of claims 1 to 12.

14. One or more computer storage media encoded with instructions that, when executed by one or more computers, cause the one or more computers to perform operations according to the methods of any one of claims 1 to 12.

15. A computer program comprising instructions that when executed by a data processing apparatus, cause the data processing apparatus to perform operations according to the methods of any one of claims 1 to 12.
